# EUROPÄISCHE PATENTANMELDUNG

(11) **EP 1 090 543 A1**
(43) Veröffentlichungstag der Anmeldung: **11.04.2001**
(21) Anmeldenummer: 99203251.6
(22) Anmeldetag: 05.10.1999
(51) Int. Cl.: A01F 15/07, B65B 11/04

(54) **Vorrichtung und Verfahren zum Umhüllen von Körpern, insbesondere von Erntegutballen**

(71) Anmelder: Lely Research Holding AG, 6300 Zug (CH)
(72) Erfinder: van der Lely, Olaf, 6300 Zug (CH)
(74) Vertreter: Corten, Maurice Jean F.M.

(57) **Zusammenfassung**

Die Erfindung betrifft eine Vorrichtung (3, 4) zum Umhüllen von Körpern, insbesondere von Erntegutballen (1) aus Heu, Stroh oder angewelktem Grüngut mit einer Folie (2). Um die Güte der Ballensilage für die weitere Verwertung erkennbar zu machen, werden erfindungsgemäß Mittel (13, 32, 35) vorgeschlagen zum Anbringen einer Kennzeichnung wie eines Etiketts (15) oder einer Bedruckung auf, an, in oder unter die den Ballen umhüllende Folie (2).

## Beschreibung

Die Erfindung betrifft eine Vorrichtung zum Umhüllen von Körpern, insbesondere von Erntegutballen aus Heu, Stroh oder angewelktem Grüngut mit einer Folie.

Die Erfindung betrifft ferner ein Verfahren zum Umhüllen von Körpern, insbesondere von Erntegutballen aus Heu, Stroh oder angewelktem Grüngut mit einer Folie in einer vorstehend genannten Vorrichtung.

Die Umwicklung von Ballen aus frischem oder vorgewelktem Gras mit einer dehnbaren und selbstanhaftenden Folie wird gegenwärtig immer beliebter, weil die dicht umwickelten Ballen neben weiteren Vorteilen innerhalb der Folienumhüllung in relativ kurzer Zeit zu Silage reifen, ohne daß die Umwelt schädigender Silagesaft austritt, wie es bei Fahrsilos oder Silagetürmen der Fall ist.

Es werden sowohl runde wie auch rechteckige Ballen eingewickelt. Derzeit sind im wesentlichen zwei Ballen-Umwicklungssysteme in der Praxis eingeführt. Bei dem sogenannten Wickeltischsystem werden während der Drehung des Ballens um eine horizontale Achse und gleichzeitiger Drehung um eine vertikale Achse aufeinanderfolgende überdeckende Folienwicklungen zwei bis dreimal um den gesamten äußeren Ballenumfang herumgelegt. Bei dem sogenannten Dreharmgerät liegt der Ballen zwar auch auf einer Art Wickeltisch, der den Ballen um seine horizontale Längsachse dreht, jedoch dreht sich der Wickeltisch nicht gleichzeitig um seine senkrechte Achse, sondern die Relativdrehung zwischen Ballen und Vorratsrolle wird durch einen den Ballen umkreisenden, an seinem äußeren Ende die Folienrolle tragenden Dreharm erzeugt.

Die Silagequalität hängt einerseits von der Ballenqualität und andererseits von der Qualität der Folienumwicklung ab.

Art, Alter und Anwelkgrad des Erntegutes sowie Schwadvorbereitung und Vorbehandlung des Erntegutes (geschnitten oder ungeschnitten) sowie insbesondere die Ballenpreßdichte und -form bestimmen hauptsächlich die Ballenqualität. Ballen mit höherer Preßdichte besitzen einen geringeren Luftanteil, so daß innerhalb des umwickelten Ballens eine bessere Silagequalität erreichbar ist.

Die Qualität der Folienumwicklung wird durch die Qualität der Folie, d. h. Herstellungsverfahren (gezogen oder geblasen), Foliendicke, Folieneinfärbung (weiß, schwarz, grün), Reißkraft, Klebkraft sowie Gasdurchlässigkeit und insbesondere durch die Sorgfalt des Anwenders bestimmt, d. h. genaue Einstellung der Vorstreckung der Folie, gleichmäßige Folienüberlappung und richtige Lagenzahl sowie sorgfältige Ballenablage.

Eine hohe Silagequalität läßt sich nur erreichen, wenn alle vorgenannten Bedingungen eingehalten werden.

Bei den in jüngster Zeit eingeführten Kombinationen von Rundballenpresse und Vorrichtung zum Umwickeln der Ballen, die hauptsächlich im Lohnbetrieb eingesetzt werden, obliegt es also der Sorgfalt einer einzigen Person, ob hochwertige Silage entsteht oder nicht.

Der Erfindung liegt die Aufgabe zugrunde, die Güte der Ballensilageherstellung für die weitere Verwertung, insbesondere bei Fütterung an Hochleistungstiere erkennbar und dadurch rückverfolgbar zu machen.

Diese Aufgabe wird hinsichtlich der Vorrichtung dadurch gelöst, daß Mittel vorgesehen sind zum Anbringen einer Kennzeichnung wie eines Etiketts oder einer Bedruckung auf, an, in oder unter die den Ballen umhüllende Folie.

Die der Erfindung zugrundeliegende Aufgabe wird hinsichtlich des Verfahrens dadurch gelöst, daß die Steuerung der Mittel zum Anbringen einer Kennzeichnung in Abhängigkeit von dem Umhüllungsgrad des Ballens mit Folie erfolgt.

Mit der erfindungsgemäßen Vorrichtung bzw. dem erfindungsgemäßen Verfahren sind somit bei entsprechender Kennzeichnung beispielsweise Herkunft, Qualität, Preß-und/oder Umhülldatum sowie insbesondere der das Pressen und Umwickeln ausführende Lohnunternehmer oder Landwirt jederzeit erkennbar und rückverfolgbar. Macht man die Anbringung einer Kennzeichnung von der Einhaltung vorbestimmter Anforderungen bei der Silageerzeugung abhängig, so kann die Kennzeichnung als Gütesiegel für eine durchgängige Qualitätssicherung über die gesamte Produktionsschiene der Ballensilage und beispielsweise bei Vermarktung auch zur Abrechnung dienen. Schließlich hat die Kennzeichnung nach außen hin auch einen Werbeeffekt für die an der Erzeugung beteiligten Maschinen bzw. Firmen.

Vorteilhafterweise ist die Kennzeichnung ein Selbstklebeetikett, beispielsweise aus bedruckter Folie, das auf einem Etikettenträgerband angeordnet ist.

In weiterer Ausgestaltung ist vorgesehen, daß die Mittel ein Etikettenspendegerät und ein Andrückelement umfassen. An sich bekannte Etikettenspendegeräte erlauben auf einfache Weise eine Bereitstellung eines Etiketts, in dem ein Etikettenträgerband um eine Abziehkante herumgezogen wird, wodurch das Etikett abgelöst, durch ein Andrückelement auf der Folienumwicklung des Ballens angeheftet und angedrückt wird.

Das Ablösen des Etiketts vom Etikettenträgerband kann automatisch durch den sich drehenden Ballen oder auch durch mechanische, elektrische, hydraulische und/oder pneumatische Hilfsantriebe oder durch eine Antriebsquelle vom Schlepper erfolgen.

In weiterer Ausgestaltung der Erfindung sind Mittel vorgesehen zur individuellen Bedruckung des einzelnen Etiketts. Gleichbleibende Parameter, z. B. Pressenfabrikat werden auf das Etikett vorgedruckt, während sich ändernde Parameter wie Bediener oder Umhüllungsdatum individuell vor oder beim Anbringen der Selbstklebeetiketten mechanisch oder elektronisch nach entsprechender Eingabe vom Bediener oder vom Ballen aus gesteuert aufgedruckt werden. Gegebenenfalls kann der Bediener seine einwandfreie Arbeit am Feldende durch seine Unterschrift auf dem Etikett eines Ballens bestätigen.

Grundsätzlich ist es möglich, die Steuerung der Mittel zum Anbringen einer Kennzeichnung in Abhängigkeit von dem Umhüllungsgrad des Ballens mit Folie vorzunehmen. Da das angebrachte Selbstklebeetikett nicht mehr von Folie überwickelt werden soll, erfolgt die Anbringung kurz vor, während oder kurz nach Beendigung des Umhüllungsvorganges. Bei weißer oder nahezu transparenter Folie kann auch ein nicht klebendes Etikett unter eine der letzten Folienlagen gelegt werden, wo es trotz einfacher Überwicklung mit Folie noch sichtbar ist.

Als Kennzeichnungen können beispielsweise runde oder rechteckige Vordruck- oder Blankoselbstklebeetiketten oder auch Etikettenbänder oder selbstklebende, bedruckte Folienbänder verwendet werden, die im Abstand Perforationen aufweisen oder durch eine Trenneinrichtung abschnittsweise abgetrennt werden. Desgleichen kann die Kennzeichnung elektronisch erfaßbare Daten enthalten, um den Silageballen zum Beispiel mit mannlosem Handlingsystem automatisch vom Erdboden aufzunehmen, zu transportieren oder weiterzuverarbeiten. Es sind auch sogenannte `Smart Labels` denkbar, worunter auf Folie aufgebrachte hauchdünne elektronische Transponder, d. h. Sende-Empfangseinrichtungen mit Mikrochip und Antenne verstanden werden.

Weitere zweckmäßige Ausgestaltungen der Erfindung ergeben sich aus den übrigen Unteransprüchen und aus der nachfolgenden Beschreibung mehrerer Ausführungsbeispiele des Erfindungsgegenstandes anhand der Zeichnung.

### Es zeigen:

Fig. 1 eine erste Vorrichtung zur Kennzeichnung eines mit Folie umwickelten Ballens bei einer Dreharm-Wickelvorrichtung in perspektivischer schematischer Darstellung in einer Stellung des Dreharmes nach Anbringen eines Etiketts am Ballen,
Fig. 2 ein Etikettenspendegerät aus Figur 1 in vergrößerter Darstellung während des Andrückens eines Etiketts auf die am Ballen anliegende Folie mittels einer Andrückrolle,
Fig. 3 eine zweite Vorrichtung zur Kennzeichnung eines mit Folie umwickelten Ballens in perspektivischer schematischer Darstellung,
Fig. 4 und 5 jeweils eine weitere Vorrichtung zur Kennzeichnung eines mit Folie umwickelten Ballens auf einer Wickeltisch-Vorrichtung in perspektivischer Darstellung und
Fig. 6 eine andere Vorrichtung zur Bedruckung eines mit Folie umwickelten Ballens auf einer Wickeltisch-Vorrichtung in perspektivischer Darstellung.

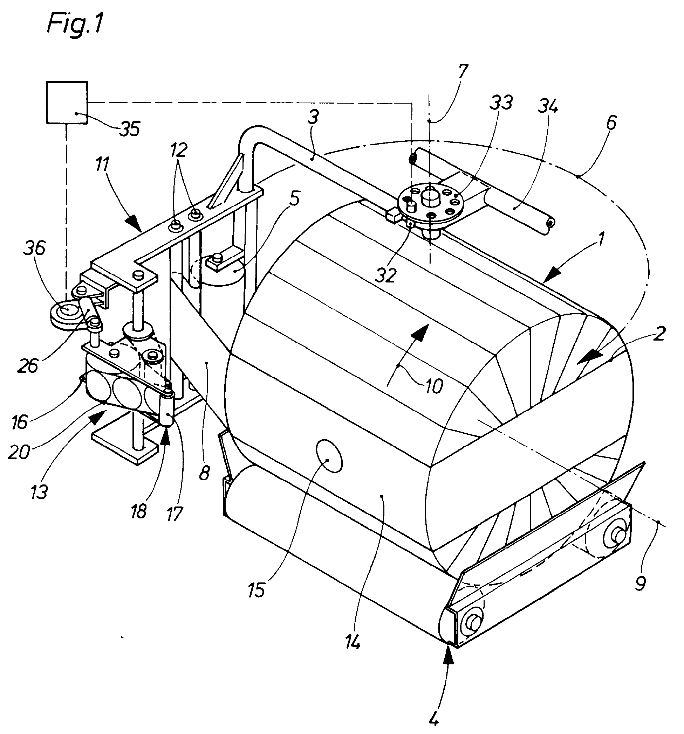

Bei der in Figur 1 dargestellten Vorrichtung zum Umhüllen eines Erntegutballens 1 mit einer dehnbaren und selbstanhaftenden Folie 2 handelt es sich um ein Ausführungsbeispiel mit einem Dreharm 3 und einem feststehenden Wickeltisch 4 zur Aufnahme eines Erntegutballens 1, wie es im wesentlichen in der EP 0 234 763 A1 beschrieben ist. Der Dreharm 3 trägt an seinem äußeren, unteren Ende eine Folienvorratsrolle 5, die während des Umhüllungsvorganges in einer Drehbewegung mit einer Drehrichtung 6 um eine vertikale Achse 7 um den Erntegutballen 1 herum geführt wird, wobei ein Folienstreifen 8 von der Folienvorratsrolle 5 abgezogen und um den sich um eine horizontale Rotationsachse 9 mit einer Drehrichtung 10 drehenden Erntegutballen 1 gewickelt wird. Wie aus Figur 1 hervorgeht, ist der gesamte äußere Ballenumfang mit sich überlappenden Folienstreifen, beispielsweise zweifach umwickelt, so daß der Umhüllvorgang unmittelbar vor der Beendigung ist, die dadurch erfolgt, daß eine nicht dargestellte Schneid-Klemmeinrichtung den Folienabschnitt 8 im freien Bereich zwischen Ballen 1 und Dreharm 3 abtrennt und durch Klemmung für den Umhüllvorgang eines weiteren Ballens 1 bereithält.

Wie aus Figur 1 weiterhin hervorgeht, ist in der Bewegungsbahn des Folienstreifens 8 zwischen der Folienvorratsrolle 5 und dem Erntegutballen 1 eine Folienstreckvorrichtung 11 angebracht, welche zumindest zwei vertikal angeordnete Streckwalzen 12 umfaßt. Die Folienstreckvorrichtung 11 ist dabei mit der Vorratsrolle 5 zu einer Baueinheit zusammengefaßt am Dreharm 1 angebracht.

Erfindungsgemäß ist der Folienstreckvorrichtung 11 eine Vorrichtung 13 zur Kennzeichnung eines Folienabschnittes 14 auf dem Erntegutballen 1 mit einem Etikett 15 oder einem Aufdruck nachgeschaltet. In einer einfachen konstruktiven Ausbildung handelt es sich um ein Etikettenspendegerät 16 mit einer Andrückrolle 17, das aus einer vom Ballen 1 entfernten Ruhelage 18 in eine Arbeitslage überführbar ist, in der ein Etikett 15 an voreinstellbarer Position an der Folienoberfläche angebracht und aufgedrückt wird. Der Ballen 1 bzw. die Folienoberfläche bildet in diesem Fall beim Aufdrücken der Etikette 15 die Gegenkraft. Figur 1 zeigt den Erntegutballen 1 mit angebrachtem Etikett 5.

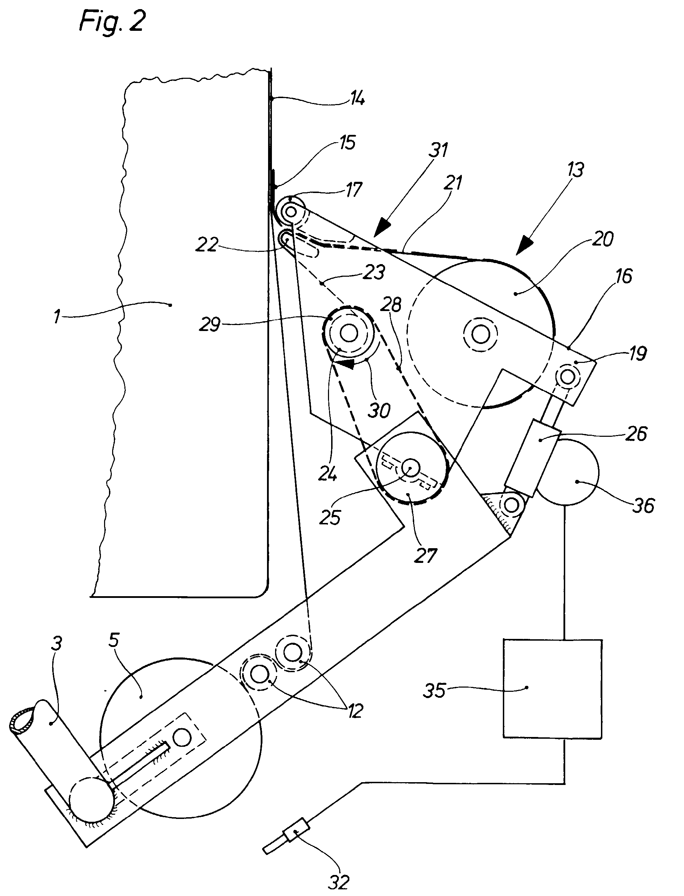

Das Etikettenspendegerät 16 und der Anbringungsvorgang am Ballen 1 sind am besten aus Figur 2 ersichtlich. Das Etikettenspendegerät 16 weist eine in einem Gehäuse 19 drehbar angeordnete Etiketten-Vorratsrolle 20 auf, die aus einem auf einem nicht dargestellten Rollenkern aufgewickelten Etiketten-Trägerband 21 besteht. Zum Spenden eines Etiketts 15 wird das Etiketten-Trägerband 21 durch eine Antriebseinrichtung um eine Abziehkante 22 herumgezogen, wodurch ein Etikett 15 abgelöst, einem Andrückelement 17 zugeführt, an den zu kennzeichnenden Gegenstand angeheftet und angedrückt wird. Das leere Trägerband 23 wird auf eine Aufwickelrolle 24 aufgewickelt. Handetikettiergeräte dieser Art sind beispielsweise in der EP 0 810 155 B1 dargestellt und beschrieben. Für die automatische Anbringung von Etiketten bei Umhüllungsvorrichtungen für Ballen sind diese Einrichtungen aber nicht geeignet.

Wie aus Fig. 1 und Fig. 2 ersichtlich, ist das erfindungsgemäße Etikettenspendegerät 16 an einer parallel und mit Abstand zu den Streckwalzen 12 ebenfalls an der Baueinheit befestigten Welle 25 in horizontaler Ebene verschwenkbar gelagert. Zur Festlegung des Anbringortes des Etiketts 15 auf der Folienoberfläche kann das Etikettenspendegerät 16 auch höheneinstellbar auf der Welle 25 angeordnet sein. Die Verschwenkung bewirkt ein Hydrozylinder 26, der einerseits an der Baueinheit und andererseits an dem Etikettenspendegerät 16 angeordnet ist. Auf der Welle 25 ist ferner ein Kettenrad 27 befestigt, das mittels Ketten- 28 oder Riementrieb mit einem Kettenrad 29 verbunden ist, das die Aufwickelrolle 24 für das Etikettenträgerband 21 beim Verschwenken des Etikettenspendegerätes 16 in Drehrichtung 30 antreibt und dabei das Etikettenträgerband 21 von der Etiketten-Vorratsrolle 20 eine bestimmte Wegstrecke um die Abziehkante 22 herumzieht, wodurch das Etikett 15 vom Trägerband 23 abgelöst, an die Folienoberfläche angeheftet, siehe Arbeitsposition 31 des Etikettenspendegerätes 16 in Figur 2 und während der Drehung des Dreharmes 3 in Drehrichtung 6 von der Andrückrolle 17 überrollt wird, so daß es fest auf der Folie 2 haftet.

Zur Steuerung des Etikettenspendegerätes 16 ist ein Sensor 32 vorgesehen, der koaxial zur Achse 7 auf einer Lochbildscheibe 33 angeordnet ist, die ihrerseits fest mit dem Gestell 34 für die Dreharmlagerung verbunden ist. Die Stellung des Sensors 32 kann entweder durch Verdrehen der Lochbildscheibe 33 oder durch Einsetzen in die unterschiedlichen Lochbilder variiert werden. Der Sensor 32 dient außerdem als Umdrehungszähler für den Dreharm 3 und ist mit einer elektronischen Steuer- und Auswerteeinheit 35 verbunden. Durch entsprechende Winkelpositionierung kann der Sensor 32 einerseits Signale für die Auslösung einer nicht dargestellten Schneid-Klemmeinrichtung, andererseits aber insbesondere das Auslösesignal für den Antrieb des Etikettenspendegerätes 16 darstellen, wenn der Dreharm 3 den Sensor 32 vor dem Anbringort des Etiketts 15 überfährt. Die Steuer- und Auswerteeinheit 35 wirkt mit einem Steuerventil 36 des Hydrozylinders 26 zusammen, um die Bewegung des Etikettenspendegerätes 16 von der Ruhelage 18 gemäß Fig. 1 in die in Figur 2 dargestellte Arbeitsposition 31 zu bewirken.

Die Aktivierung des Etikettenspendegerätes 16 wird so an der Steuer- und Auswerteeinheit 35 und/oder am Dreharmsensor 32 voreingestellt, daß das Anbringen des Etiketts 15 an der gewünschten Stelle, z. B. mittig auf der Folienbreite und in der horizontalen Längsmittelebene des Ballens 1 erfolgt, wie in Figur 1 dargestellt, wobei der Schneid-Klemmvorgang unmittelbar folgt, ohne nochmaliges Überwickeln des Etiketts 15. Der Anbringort des Etiketts 15 hängt auch davon ab, wie der Ballen 1 abgelegt wird, d. h. stirnseitig oder umfangsseitig. Die Sichtbarkeit des Etiketts 15 sollte gewährleistet sein. Der Vorteil der vorstehenden Lösung liegt insbesondere auch darin, daß keine zusätzlichen Antriebseinrichtungen notwendig sind, weil die ohnehin vorhandene Drehbewegung des Dreharmes 3 genutzt wird, um das Etikett 15 auszugeben und um die Andrückrolle 17 über das Etikett 15 zu rollen und dieses dabei anzudrücken. In diesem Ausführungsbeispiel wird beispielsweise ein rundes Vordruck-Selbstklebeetikett mit dem Namen des Pressenherstellers verwendet. Die Größe kann etwa 1/10 des Ballendurchmessers betragen. Es können natürlich auch beliebig anders gestaltete Etiketten benutzt werden. Es kann auch ein Schriftfeld vorgesehen sein für eine abschließende Unterschrift des Maschinenbedieners. In dem Etikettenspendegerät 16 kann auch ein Druckwerk angeordnet sein zum Bedrucken des Etiketts 15 vor der Ausgabe aus dem Gerät, um z. B. Umhüllungsdatum und/oder Ballengewicht mittels geeigneter Sensoren und Signalgeber auf das Etikett 15 aufzudrucken. Desgleichen können auch elektronische Signalgeber und/oder Empfänger nach Art von Transpondern oder andere Daten auf dem Etikett gespeichert werden.

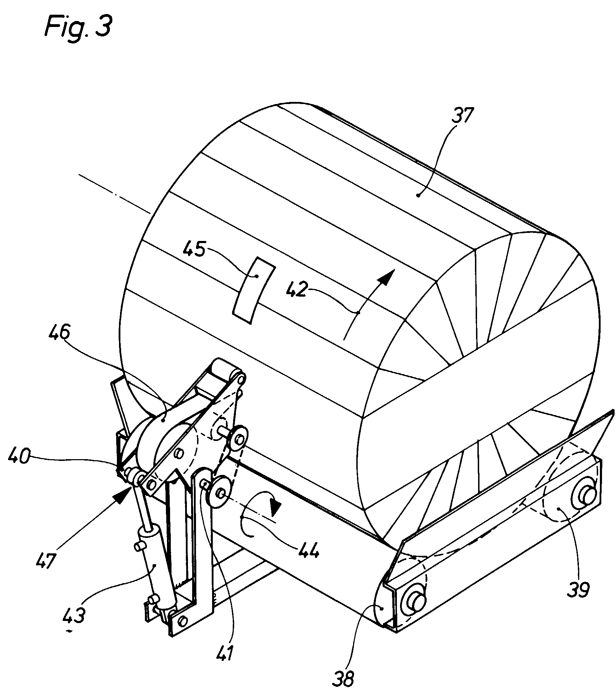

Bei der Ausführungsform gemäß Figur 3 ist lediglich ein ganzflächig mit Folie umwickelter Ballen 37 auf zwei Wickelwalzen 38, 39 ruhend gezeigt. Ein Etikettenspendegerät 40 entsprechend Figur 2 ist etwa auf halber Ballenbreite auf einer parallel zu den Wickelwalzen 38, 39 ortsfest angeordneten Tragwelle 41 verschwenkbar angeordnet. Während der Ballenrotation in durch Pfeil 42 gekennzeichnete Richtung wird das Etikettenspendegerät 40 durch Ausfahren eines Hydrozylinders 43 um die Welle 41 in Richtung 44 gegen die Folienoberfläche gedrückt, wodurch der sich drehende Ballen 1 sich selbst automatisch einen Etikettenbandstreifen 45 aufklebt. Das dadurch vorgezogene Etikettenträgerband 46 gibt ein Signal, wenn das Etikett ganz abgezogen ist, wodurch das selbsttätige Zurückschwenken des Etikettenspendegerätes 40 beispielsweise durch die Kraft eines Federelementes in die in Fig. 3 gezeigte Ruheposition erfolgt. Alternativ ist es auch denkbar, den Ballen anzuhalten und das Etikettenspendegerät entlang der Folienoberfläche zu bewegen.

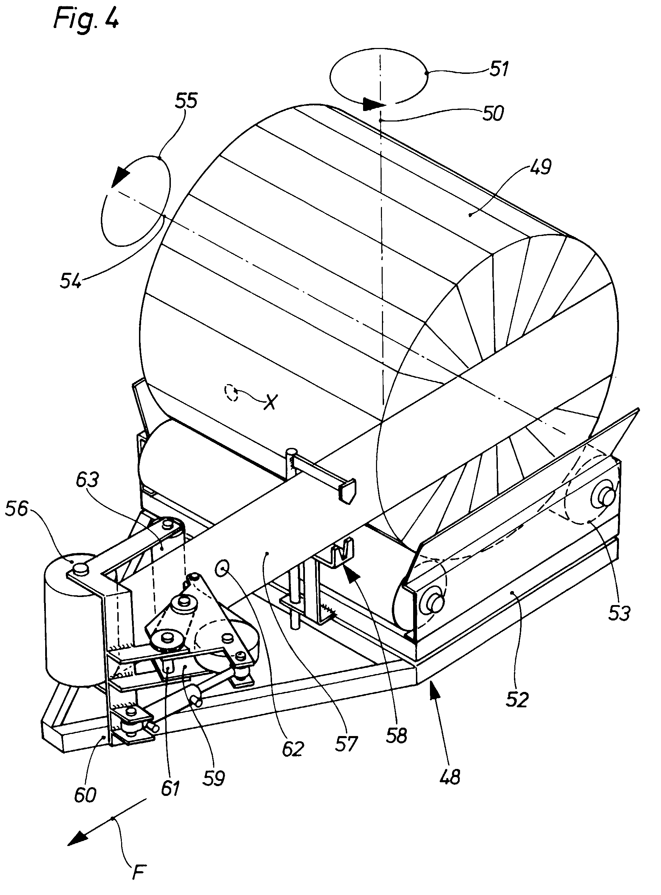

Bei der Ausführungsform gemäß Figur 4 ist eine Wickeltisch-Vorrichtung 48 zum Umhüllen eines Erntegutballens 49 gezeigt, die während des Betriebes von einem nicht dargestellten Schlepper in Fahrtrichtung F gezogen wird. Diese besteht im wesentlichen aus einem um eine vertikale Achse 50 in Drehrichtung 51 antreibbaren Wickeltisch 52 mit antreibbaren, im Abstand voneinander angeordneten Walzen 53, die den darauf ruhenden Erntegutballen 49 gleichzeitig um eine horizontale Ballenmittelachse 54 in Drehrichtung 55 drehen, wobei der Ballen 49 von einer Folienvorratsrolle 56 über eine nicht dargestellte Streckvorrichtung Folie 57 abzieht und um sich herumwickelt. An dem Wickeltisch 52 ist eine Schneid-Klemmeinrichtung 58 angebracht. Hinsichtlich Aufbau und Wirkungsweise kann auf die EP 0 367 529 B1 verwiesen werden. Wie aus Figur 4 erkennbar, ist ein Etikettenspendegerät 59 nicht mehr in der Bewegungsbahn des Ballens 49, sondern im Bereich der Laufbahn der Folie 57 zwischen Folienvorratsrolle 56 und drehbarem Wickeltisch 52 angeordnet. Das Etikettenspendegerät 59 entspricht dem aus Fig. 2 und ist um eine am Gestell 60 befestigte Welle 61 schwenkbar gelagert. Da der freie Folienbereich beim Andrücken des Etikettenspendegerätes 59 ausweichen würde, greift an der Folieninnenseite genau gegenüber von der gewünschten Andrückstelle eines Etiketts 62 eine frei drehbare, am Gestell 60 gelagerte Gegendruckrolle 63 an. Um das Etikett 62 am gewünschten Ort am Ballen 49 zu plazieren, ist lediglich der Abstand zwischen Ballenmittelachse 54 und Anbringstelle des Etiketts 62 festzulegen. Nach Anbringung des Etiketts 62 auf der Folie 57 wird der etikettierte Folienabschnitt bei weiterer Drehung des Ballens 49 um den Ballen 49 gezogen, wodurch das Etikett 62 an der gewünschten Stelle X auf dem Ballen 49 liegt. Vorzugsweise ist der Abstand des Etikettenspendegerätes 59 in Laufrichtung der Folie 57 veränderbar, um ein Etikett wahlweise an unterschiedlichen Stellen am Ballen 49 zu plazieren.

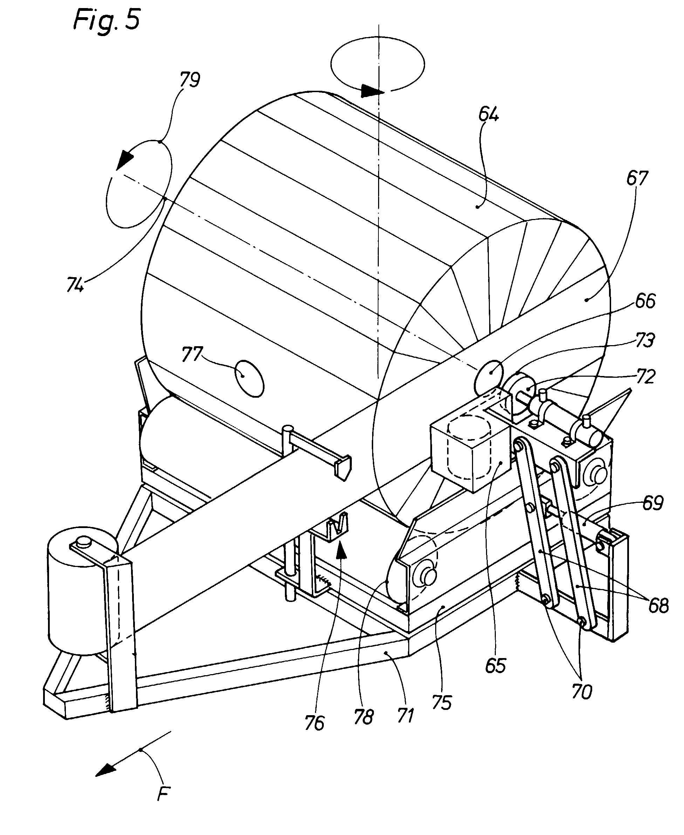

Die in Figur 5 dargestellte Vorrichtung zum Umhüllen eines Erntegutballens 64 entspricht der Vorrichtung gemäß Figur 4, jedoch ist ein Etikettenspendegerät 65 so angeordnet, daß das Anbringen eines Etiketts 66 direkt auf die am Ballen 64 anliegende Folie 67 erfolgt. Das Etikettenspendegerät 65 ist mittels Parallellenker 68 und Hydrozylinder 69 etwa in horizontaler Ballenmittelebene um Achsen 70 verschwenkbar am Gestell 71 gelagert und weist anstelle einer Andrückrolle einen hydraulisch oder pneumatisch betätigbaren Andrückstempel 72 mit Saug-Blaskopf 73 auf, der in koaxialer Richtung zur Drehachse 74 des Ballens 64 zum Andrücken des Etiketts 66 gegen die Ballenstirnseite fahrbar ist. Je nach Stellung des Wickeltisches 75 kann bei stehendem Ballen 64 wahlweise ein Etikett 66 auf die Ballenstirnseite, wie in Fig. 5 gezeigt, oder auf den Ballenumfang angebracht werden.

In Fig. 5 ist der Erntegutballen 64 bis auf den Schneid-Klemmvorgang fertig mit Folie 67 umhüllt. Die Ballenmittelachse 74 ist koaxial zur Bewegungsrichtung des Saug-Blaskopfes 73 ausgerichtet. Zum Etikettieren des Ballens 64 wird das Etikett 66 zunächst dem Saug-Blaskopf 73 zugeführt, angesaugt und bei stehendem Ballen 64 auf die den Ballen 64 umhüllende Folie 67 gedrückt. Zum Ablösen des Etiketts 66 vom Saug-Blaskopf 73 wird auf Blasluft umgestellt und das Etikettenspendegerät 65 zurückgeschwenkt in die in Fig. 5 gezeigte Position, in der das Etikettenspendegerät 65 außerhalb der Bewegungsbahn des Wickeltisches 75 ist.

Es ist grundsätzlich auch möglich, ein entsprechendes Etikettenspendegerät mit drehbarem Saug-Blaskopf am Wickeltisch 75 anzuordnen und ein Etikett während der laufenden Folienumhüllung, d. h. bei drehendem Wickeltisch und Ballen anzubringen. Dabei ist dann zu beachten, daß das Anbringen des Etiketts unterhalb der Folienunterkante der zuletzt abgezogenen Folie am Erntegutballen erfolgt oder das Etikettenspendegerät muß aus dem Laufbahnbereich der Folie weggeschwenkt werden, wenn weitere Umwicklungen folgen sollen.

Alternativ kann ein nicht dargestelltes Etikettenspendegerät auch neben einer Schneid-Klemmeinrichtung 76 für die Folie am Wickeltisch 75 angeordnet sein, um ein Etikett 77 umfangsseitig auf einen nicht mehr zu umhüllenden Folienabschnitt am Ballen 64 anzubringen. Hier besteht der Vorteil, daß das Etikett 77 durch die Walzen 78 bei weiter in Drehrichtung 79 rotierendem Ballen automatisch nochmals auf die Folienoberfläche aufgedrückt wird.

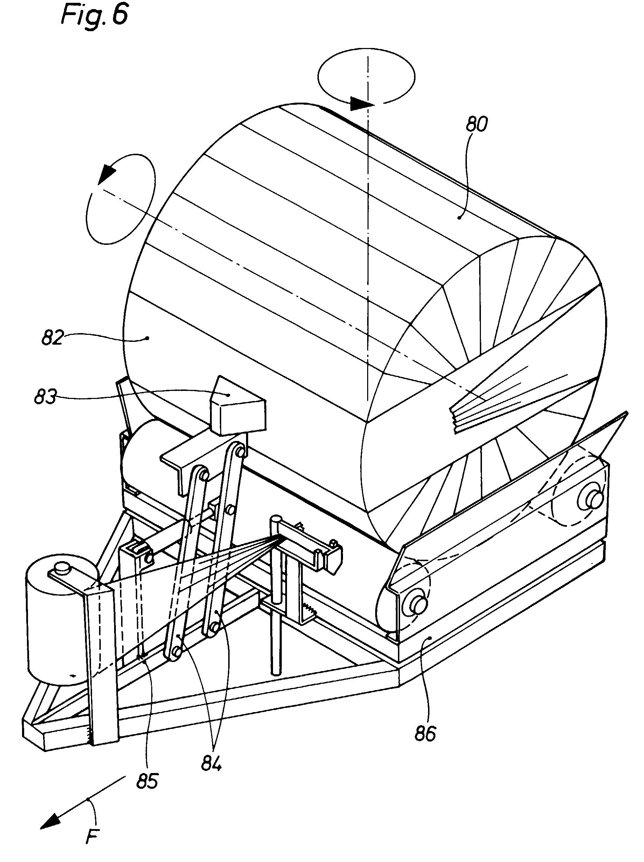

Figur 6 zeigt eine Vorrichtung zum Umhüllen eines Erntegutballens 80 gemäß Figuren 4 und 5, jedoch nach dem Schneid-Klemmvorgang der Folie mittels einer Schneid-Klemmeinrichtung 81. Zur Kennzeichnung des Ballens 80 ist in diesem Beispiel eine direkte Bedruckung der Folie 82 mittels eines Tintenstrahldruckers 83 vorgesehen. Der Tintenstrahldrucker 83 ist mittels eines Parallellenkergestänges 84 schwenkbar am Gestell 85 angelenkt. Nach erfolgter Bedruckung wird der Tintenstrahldrucker 83 wieder aus der Umlaufbahn des Wickeltisches 86 herausgefahren. Der Tintenstrahldrucker wird bei nicht drehendem Ballen beispielsweise durch die Betätigung der Schneid-Klemm-Einrichtung 81 oder durch die Kippauslösung des Wickeltisches 86 aktiviert, nach dem der Tintenstrahldrucker durch einen Hydrozylinder auf den richtigen Abstand zur Ballenoberfläche gebracht wurde. Anstelle eines Tintenstrahldruckers sind auch einfache Druckstempel oder ähnliche Druckmittel einsetzbar.

## Patentansprüche

1. Vorrichtung (3, 4, 48, 52, 75, 86) zum Umhüllen von Körpern, insbesondere von Erntegutballen (1, 49, 64, 80) aus Heu, Stroh oder angewelktem Grüngut mit einer Folie (2), dadurch gekennzeichnet, daß Mittel (13, 32, 35, 83) vorgesehen sind zum Anbringen einer Kennzeichnung wie eines Etiketts (15, 45, 62, 66, 77) oder einer Bedruckung auf, an, in oder unter die den Ballen umhüllende Folie (2).

2. Vorrichtung nach Anspruch 1, dadurch gekennzeichnet, daß das Etikett (15, 45, 62, 66, 77) ein Selbstklebeetikett ist.

3. Vorrichtung nach Anspruch 1 oder 2, dadurch gekennzeichnet, daß die Mittel (13, 35) ein Etikettenspendegerät (16, 40, 59, 65) und ein Andrückelement (17, 72, 73) umfassen.

4. Vorrichtung nach einem der Ansprüche 1 bis 3, dadurch gekennzeichnet, daß die Mittel (13, 83) an einem den Ballen (1) umkreisenden Dreharm (3) angeordnet sind.

5. Vorrichtung nach einem der Ansprüche 1 bis 3, dadurch gekennzeichnet, daß die Mittel (13, 83) an einem drehbaren Wickeltisch (52, 75, 86) angeordnet sind.

6. Vorrichtung nach Anspruch 4 oder 5, dadurch gekennzeichnet, daß die Mittel (13, 83) einer Folienstreckvorrichtung (11) nachgeschaltet sind.

7. Vorrichtung nach einem der Ansprüche 1 bis 3, dadurch gekennzeichnet, daß die Mittel (13, 83) beweglich am Gestell (60, 71) angeordnet sind.

8. Vorrichtung nach einem der Ansprüche 1 bis 3, dadurch gekennzeichnet, daß die Mittel (13, 83) direkt oder indirekt mit einer Folien-Schneid-Klemmeinrichtung (76, 81) gekoppelt sind.

9. Vorrichtung nach einem der Ansprüche 1 bis 3, dadurch gekennzeichnet, daß die Mittel (13, 83) direkt oder indirekt mit einer Ballenabgabeeinrichtung gekoppelt sind.

10. Vorrichtung nach einem oder mehreren der vorhergehenden Ansprüche, gekennzeichnet durch Antriebsmittel (26, 36) zum Hin- und Herbewegen des Etikettenspendegerätes (16, 40, 59, 65) und/oder des Andrückelementes (17, 72, 73, 83) gegen die Folienoberfläche des umhüllten Ballens (1, 49, 64, 80).

11. Vorrichtung nach einem oder mehreren der vorhergehenden Ansprüche, dadurch gekennzeichnet, daß das Ablösen des Etiketts (15, 45) von einem Etikettenträgerband (21, 46) direkt oder indirekt durch den sich drehenden Ballen (1, 37) erfolgt.

12. Vorrichtung nach einem oder mehreren der vorhergehenden Ansprüche dadurch gekennzeichnet, daß das Abziehen des Etiketts (15, 45, 62, 66, 77) von einem Etikettenträgerband (21, 46) durch mechanische (24, 28), elektrische (35), hydraulische (26) und/oder pneumatische Hilfsantriebe oder durch eine Antriebsquelle vom Schlepper erfolgt.

13. Vorrichtung nach einem oder mehreren der vorhergehenden Ansprüche, dadurch gekennzeichnet, daß Mittel vorgesehen sind zur individuellen Bedruckung des einzelnen Etiketts mit Symbolen, Zeichen oder elektronisch erfaßbaren Daten.

14. Vorrichtung nach einem der Ansprüche 1 bis 13, dadurch gekennzeichnet, daß das Etikettenspendegerät (16, 40, 59, 65) ein mechanisches oder elektronisches Druckwerk aufweist.

15. Vorrichtung nach einem der Ansprüche 1 bis 12, dadurch gekennzeichnet, daß Mittel (83) vorgesehen sind zur individuellen, direkten Bedruckung der den Ballen (80) umhüllenden Folie (82) mit Symbolen, Zeichen oder elektronisch erfaßbaren Daten.

16. Vorrichtung nach einem oder mehreren der vorhergehenden Ansprüche, dadurch gekennzeichnet, daß der Ort des Anbringens der Kennzeichnung auf der Folie (2) an einer Steuer- und/oder Bedieneinheit (35) voreinstellbar ist.

17. Vorrichtung nach einem oder mehreren der vorhergehenden Ansprüche, gekennzeichnet durch einen den Umhüllungsgrad des Ballens (1, 49, 64, 80) mit Folie (2) und/oder die jeweilige Ballen-, Dreharm-, oder Drehtischposition ermittelnden Sensor (32) oder einen die Anzahl der Ballenumdrehungen oder die Abzugslänge der Folie von der Vorratsrolle (5) erfassenden Sensor.

18. Verfahren zum Umhüllen von Körpern, insbesondere von Erntegutballen aus Heu, Stroh oder angewelktem Grüngut mit einer Folie in einer Vorrichtung gemäß einem oder mehreren der vorhergehenden Ansprüche, dadurch gekennzeichnet, daß die Steuerung der Mittel (13, 35, 83) zum Anbringen einer Kennzeichnung in Abhängigkeit von dem Umhüllungsgrad des Ballens (1, 49, 64, 80) mit Folie erfolgt.

19. Verfahren zum Umhüllen von Körpern nach Anspruch 18, dadurch gekennzeichnet, daß die Steuerung der Mittel (13, 35, 83) zum Anbringen einer Kennzeichnung in Abhängigkeit von der Ballen-, Dreharm- oder Wickeltischposition, der Abzugslänge der Folie oder der Anzahl der Ballenumdrehungen erfolgt, um die Kennzeichnung am gewünschten Ort zu erzeugen.

20. Verfahren zum Umhüllen von Körpern nach Anspruch 18 oder 19, dadurch gekennzeichnet, daß die Steuerung der Mittel (13, 35, 83) zum Anbringen einer Kennzeichnung direkt oder indirekt gekoppelt ist mit der Bewegung einer Schneid-Klemmeinrichtung (76, 81) für die den Ballen (1, 49, 64, 80) umhüllenden Folie.

21. Verfahren zum Umhüllen von Körpern in einer Vorrichtung nach einem oder mehreren der Ansprüche 1 bis 17, dadurch gekennzeichnet, daß die Steuerung der Mittel (13, 35, 83) zum Anbringen einer Kennzeichnung in Abhängigkeit von einer Ballenabgabeeinrichtung erfolgt.

22. Verfahren zum Umhüllen von Körpern nach den Ansprüchen 18 bis 21, dadurch gekennzeichnet, daß das Anbringen der Kennzeichnung (15, 45, 62, 66) bei sich drehendem Ballen (1, 49, 64) erfolgt.

23. Verfahren zum Umhüllen von Körpern nach den Ansprüchen 18 bis 21, dadurch gekennzeichnet, daß das Anbringen der Kennzeichnung während des Stillstandes des Ballens (64, 80) erfolgt, insbesondere bei Bedruckung der Folie (82) z. B. mit Tintenstrahldrucker (83) oder elektronischen Druckern.

24. Verfahren zum Umhüllen von Körpern nach Anspruch 18, dadurch gekennzeichnet, daß eine weiße oder nahezu transparente Folie verwendet wird und das Etikett unter eine der letzten Folienlagen gelegt wird.

25. Verfahren zum Umhüllen von Körpern nach den Ansprüchen 18 bis 23, dadurch gekennzeichnet, daß ein Selbstklebeetikett so angebracht wird, daß dieses auch zum Fixieren des Folienendes auf der darunterliegenden Folie dient.

26. Verfahren zum Umhüllen von Körpern nach einem der Ansprüche 18 bis 25, dadurch gekennzeichnet, daß Klebstoff erst vor dem Auflegen des Etiketts aufgebracht oder aktiviert wird.

27. Verfahren zum Umhüllen von Körpern nach einem oder mehreren der Ansprüche 18 bis 25, dadurch gekennzeichnet, daß ein Vordruck-Selbstklebeetikett oder ein bedrucktes, selbstklebendes Folienband verwendet wird.

28. Verfahren zum Umhüllen von Körpern nach Anspruch 27, dadurch gekennzeichnet, daß das Vordruck- oder Blankoetikett zusätzlich individuell bedruckt oder beschriftet wird.

29. Verfahren zum Umhüllen von Körpern nach Anspruch 28, dadurch gekennzeichnet, daß der umhüllte Ballen die individuelle Bedruckung selbst steuert in Abhängigkeit von auf den Ballen bezogenen, sich ändernden Parametern, z. B. Ballengewicht.

30. Verfahren zum Umhüllen von Körpern nach Anspruch 29, dadurch gekennzeichnet, daß die Kennzeichnung und/oder individuelle Bedruckung des Etiketts fernsteuerbar und von elektronischen Datenerfassungssystemen erkennbar ist.

31. Verfahren zum Umhüllen von Körpern nach einem oder mehreren der vorhergehenden Ansprüche 18 bis 30, dadurch gekennzeichnet, daß der Ballen elektronische Kennzeichnungen wie Chips oder Transponder aufweist, mittels welcher der Ballen geortet werden kann.

32. Verfahren zum Umhüllen von Körpern nach Anspruch 31, dadurch gekennzeichnet, daß die elektronische Kennzeichnung des Ballens unter Nutzung der Satellitennavigation GPS oder DGPS erfolgt.
